# EUROPÄISCHE PATENTANMELDUNG

(11) **EP 4 610 534 A1**
(43) Veröffentlichungstag der Anmeldung: **03.09.2025**
(21) Anmeldenummer: 24160739.9
(22) Anmeldetag: 01.03.2024
(51) Int. Cl.: F16L 25/00, B23K 37/053, F16L 55/134, F16L 59/14

(54) **ROHRVERBINDUNGSELEMENT**

(71) Anmelder: Georg Fischer Rohrleitungssysteme AG, 8201 Schaffhausen (CH)
(72) Erfinder: Reiz, Robert, 79780 Stühlingen (DE); Pesic, Kresimir, 8200 Schaffhausen (CH); Rösch, Jürgen, 79853 Lenzkirch (DE); Gosmann, Gerd, 85276 Pfaffenhofen (DE)
(74) Vertreter: Fenner, Seraina

(57) **Zusammenfassung**

Rohrverbindungselement (1) zur Verbindung von zwei Rohrenden über deren Innenumfang, vorzugsweise zur Verbindung von Mediumrohren in vorisolierten Rohrleitungen, beinhaltend, mindestens eine aufblasbare Blase (3), eine Längsachse (4), Spannsegmente (5) und einen metallischen Ring (6), wobei die Spannsegmente am Aussenumfang der Blase angeordnet sind und eine im Aussendurchmesser veränderbare Hülse (7) bilden.

## Beschreibung

Die Erfindung betrifft ein Rohrverbindungselement zur Verbindung von zwei Rohrenden über deren Innenumfang, vorzugsweise zur Verbindung von Mediumrohren in vorisolierten Rohrleitungen, beinhaltend, mindestens eine aufblasbare Blase, eine Längsachse, Spannsegmente und einen metallischen Ring.

Rohrverbinder dienen dazu einzelne Rohre zu einer Rohrleitung zu verbinden. In der Regel werden sie dann in der Rohrleitung belassen. Die Rohrverbinder werden am Innendurchmesser der zu verbindenden Rohre angeordnet, manche weisen einen integrierten Heizdraht auf um mit den Rohrenden verschweisst zu werden und manche werden verleimt, verschweisst oder auch nur ineinander gesteckt und mittels zusätzlicher Umhüllungen dichtend verbunden.

Die WO 2017/037541 A1 offenbart einen Rohrverbinder der durch Einstecken in die Rohrenden die Rohre zu einer Leitung verbindet. Am Aussenumfang der verbundenen Rohre ist eine Rohrverkleidung aus Metall angeordnet bei der die Rohre miteinander verschweisst werden. Dadurch wird die Rohrleitung geschützt und dicht umschlossen.

Die WO 2022/112845 offenbart ebenfalls einen Rohrverbinder, der in der Rohrleitung verbleibt und in die beiden zu verbindenden Rohrenden einzustecken ist. Die beiden Rohrenden werden zudem noch miteinander verschweisst und von einer Hülse umgeben.

Im oben aufgeführten Stand der Technik wird der Rohrverbinder immer in der Rohrleitung belassen.

Es ist Aufgabe der Erfindung einen Rohrverbinder vorzuschlagen, der Rohrstangen ausschliesslich zu dessen Bearbeitung und Weiterverarbeitung miteinander verbindet sowie der Herstellung vorisolierter Rohre dient und nicht im Rohr verbleibt.

Diese Aufgabe wird erfindungsgemäss dadurch gelöst, dass die Spannsegmente am Aussenumfang der Blase angeordnet sind und eine im Aussendurchmesser veränderbare vorzugsweise zylindrische Hülse bilden.

Das erfindungsgemässe Rohrverbindungselement dient dem Verbinden von zwei Rohrenden über deren Innenumfang. Vorzugsweise ist das erfindungsgemässe Rohrverbindungselement zur Verbindung von Mediumrohren in vorisolierten Rohrleitungen angeordnet. Das erfindungsgemässe Rohrverbindungselement beinhaltet mindestens eine aufblasbare Blase, eine Längsachse, Spannsegmente und einen metallischen Ring. Die Spannsegmente sind am Aussenumfang der Blase angeordnet und bilden eine im Aussendurchmesser veränderbare vorzugsweise zylindrische Hülse.

Das erfindungsgemässe Rohrverbindungselement weist eine vorzugsweise zylindrische Form auf.

Der metallische Ring dient der Detektion. Die zusammengefügten Rohre sollen nach dem Isolationsvorgang bzw. dem Aufbringen der Aussenschichten wieder an der Fügestelle in einzelne Rohrstangen unterteilt bzw. getrennt werden. Dazu weist das Rohrverbindungselement einen metallischen Ring auf, der detektiert und dadurch die Trennstelle erkannt wird. Mittels des Rohrverbindungselements werden die Innenrohre zu einer Rohrleitung verbunden, die dann auf einer Rohrleitungsisolationsanlage vorisoliert wird und wieder in handliche einzelne vorisolierte Rohrstangen unterteilt. Der Rohrverbinder weist die Form eines geschlossener Zylinders auf. Er weist keine axial verlaufende Bohrung auf und verschliesst somit den Rohrleitungsquerschnitt an den Verbindungsstellen, solange er in der Rohrleitung zum Aufbringen der Schichten angeordnet ist. Nach der Trennung in vorisolierte Rohrstangen wird der Rohrverbinder aus dem Mediumrohr entfernt.

Die Blase ist vorzugsweise aus Silikon hergestellt und dehnbar. Durch Zuführen von Druckluft oder einem anderen Gas dehnt sich die Blase und vergrössert den Umfang bzw. Durchmesser. Die am Aussenumfang der Blase angeordneten Spannsegmente verschieben sich ebenfalls radial nach aussen, wodurch der Aussendurchmesser bzw. Aussenumfang der durch die Spannsegmente gebildeten Hülse ebenfalls vergrössert wird.

Vorzugsweise weisen die Spannsegmente eine ringsegmentförmige Grundfläche auf und erstrecken sich axial bzw. parallel zur Längsachse. Wobei die Längsachse senkrecht zur Grundfläche verläuft. Die Spannelemente sind als Hohlzylindersegmente ausgebildet.

Vorzugsweise weist das Rohrverbindungselement mindestens zwei Spannsegmente auf, wobei die Spannsegmente eine im Aussendurchmesser bzw. Aussenumfang veränderbare zylindrische Hülse bilden. Durch das Aufblasen der Blase im Inneren der Hülse, die durch die Spannsegmente gebildet ist, erweitert sich auch der Aussenumfang der Hülse bzw. der radiale Abstand der Spannsegmente wird vergrössert und bei Abfall des Drucks in der Blase verringert sich der Durchmesser der Blase und somit auch der radiale Abstand der Spannsegmente zur Achse bzw. der Umfang der Hülse, die durch die Spannsegmente gebildet wird.

Es hat sich als vorteilhaft gezeigt, wenn ein Spannsegmentverbindungselement die Spannsegmente radial elastisch verschiebbar führt, um die Veränderung der radialen Anordnung der Spannsegmente bzw. des Aussenumfangs der Hülse zu ermöglichen. Das Spannsegmentverbindungselement hält die Spannsegmente in einer Aussendurchmesser veränderbaren Hülsenform zusammen. Als bevorzugte Ausführungsform hat sich gezeigt, wenn als Spannsegmentverbindungselement ein elastischer Ring vorzugsweise ein O-Ring eingesetzt ist, der die Spannelemente bzw. die durch die Spannelemente gebildet Hülse umgibt. Vorzugsweise ist ein Spannsegmentverbindungselement jeweils am Anfang und am Ende der zylindrischen Hülse bzw. der Spannelemente angeordnet.

Als vorteilhaft hat sich gezeigt, wenn der metallische Ring axial in der Mitte des Rohrverbindungselements angeordnet ist. Dadurch ist in den beiden Rohrenden eine gleich lange Hülse vorgesehen um dieselbe Spannkraft auf den Rohrenden vorzusehen.

Vorzugsweise weist das Rohrverbindungselement ein Ventil zum Aufblasen der Blase auf. Vorzugsweise ist das Ventil axial in der Mitte des Rohrverbindungselements angeordnet. Es ist vorteilhaft, wenn die Druckluft über dasselbe Ventil an die beide Blasen eingespeist wird.

Als vorteilhaft hat sich gezeigt, wenn stirnseitig der Blase Abschlussscheiben angeordnet sind. Diese begrenzen die Blase axial und führen gleichzeitig die Spannelemente in radialer Richtung bei der Durchmesserveränderung der Blase. Vorzugsweise weist das Spannsegment am Innenumfang eine Führungsnut auf. Die Abschlussscheibe ist vorzugsweise in der Führungsnut der Spannsegmente angeordnet. Es ist vorteilhaft, wenn die Spannsegmente jeweils am Ende und am Anfang in axialer Richtung eine Führungsnut aufweisen, in der die Abschlussscheiben angeordnet sind und dadurch eine im Aussenumfang veränderbare Hülse bilden, die an den beiden Enden Abschlussscheiben aufweisen. Die Spannsegmente sind vorzugsweise entlang des Umfangs der Abschlussscheiben reihum angeordnet.

Als bevorzugte Ausführungsform hat sich gezeigt, wenn mindestens zwei aufblasbare Blasen axial nebeneinander angeordnet sind. Vorzugsweise sind zwei veränderbare zylindrische Hülsen durch Spannelemente um die Blasen angeordnet.

Als vorteilhafte Ausführungsform hat sich gezeigt, wenn zwei Blasen, mit jeweils am Aussenumfang der Blase angeordneten Spannelementen, axial nebeneinander angeordnet sind und die Spannelementen in stirnseitig der Blase angeordnete Abschlussscheiben axial fixiert und radial geführt sind. Zwischen den beiden Blasen mit den im Aussenumfang veränderbaren Hülsen ist ein metallischer Ring angeordnet, was das Detektieren des Rohrverbindungselements erlaubt.

Vorzugsweise verlaufen entlang des Aussenumfangs des Spannsegments Stege. Diese dienen dazu den Gripp zwischen Rohrverbindungselement und dem Rohrinnendurchmesser zu erhöhen. Vorzugsweise sind mehrere Stege axial beabstandet am Aussenumfang des Spannelementes angeordnet.

Als vorteilhaft hat sich gezeigt, wenn am Innenumfang des Spannsegments Führungsnuten zur Anordnung der Abschlussscheiben angeordnet sind. Wie bereits erwähnt dienen diese der radialen verstellbaren Führung der Spannelemente, indem die Abschlussscheiben in die Führungsnuten greifen. Zudem dienen sie auch der axialen Anordnung der Spannsegmente.

Vorzugsweise ist entlang der Längsachse ein Zuganker angeordnet, der mit zwei jeweils stirnseitig der Blase angeordneten Abschlussscheiben verbunden ist. Dies stabilisiert das Rohrverbindungselement.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen schematischen Längsschnitt durch ein erfindungsgemässes Rohrverbindungselement,
- Fig. 2: einen Längsschnitt durch eine Blase mit veränderbarer Hülse des erfindungsgemässen Rohrverbindungselement und
- Fig. 3: eine dreidimensionale Ansicht einer Blase des erfindungsgemässen Rohrverbindungselement mit am Aussenumfang angeordneten Segmentelementen zur Bildung der veränderbaren Hülse.

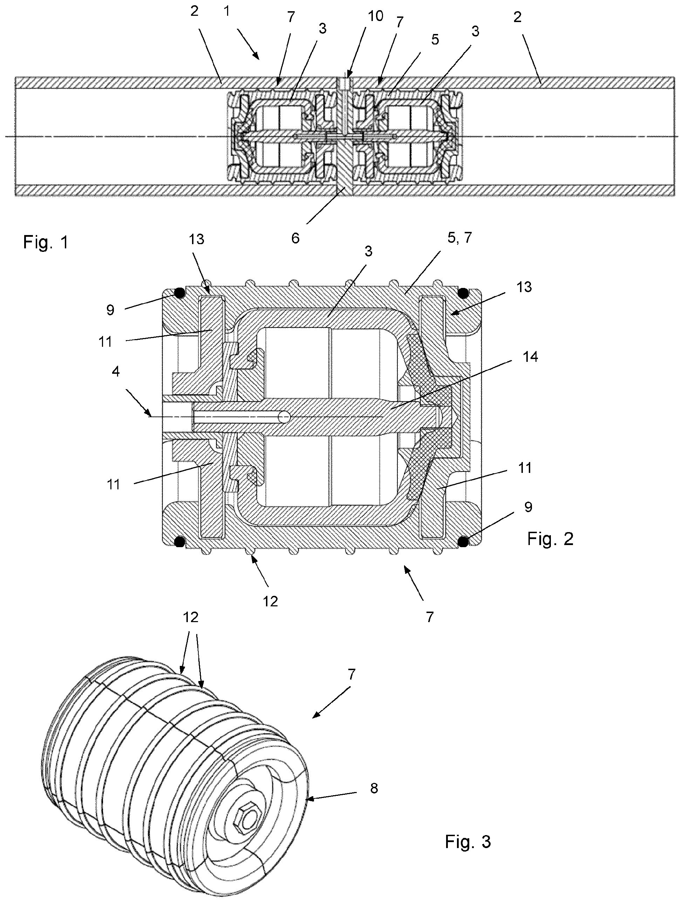

Die in Fig. 1 dargestellte schematische Zeichnung zeigt ein Rohrverbindungselement 1, das in zwei miteinander zu verbindenden Rohrenden 2 angeordnet ist. Vorzugsweise wird diese Art der Verbindung für die Herstellung von vorisolierten Rohren vorgesehen. Damit können die Mediumrohre miteinander verbunden und die Isolationsschicht kann durchgehend auf die Mediumrohrleitung appliziert werden. Nach dem Aufbringen der Isolation und der Aussenschicht wird die vorisolierte Rohrleitung wieder in handliche vorisolierte Rohrstangen in der Verbindungsstelle durchtrennt, wobei die Trennung durch das Rohrverbindungselement erfolgt und das Rohrverbindungselement aus den vorisolierten Rohrstangen entfernt wird. Das erfindungsgemässe Rohrverbindungselement 1 beinhaltet mindestens eine Blase 3, wobei in Fig. 1 eine bevorzugte Ausführungsform mit zwei entlang der Längsachse 4 angeordneten Blasen 3 dargestellt ist. Die Blase 3 wird an dessen Aussenumfang jeweils von Spannsegmenten 5 umgeben. Zudem weist das erfindungsgemässe Rohrverbindungselement 1 vorzugsweise in axialer Richtung in der Mitte einen metallischen Ring 6 auf, der das Detektieren des Rohrverbindungselements 1 in der Rohrleitung ermöglicht und somit die Trennstelle erkennen lässt. Die am Aussenumfang der Blase 3 angeordneten Spannelemente 5 bilden eine im Aussenumfang veränderbare Hülse 7. Die Spannsegmente 5 weisen eine ringsegmentförmige Grundfläche 8 auf, was gut aus Fig. 3 zu erkennen ist. Die Grundfläche 8 erstreckt sich in axialer Richtung und bildet dadurch ein Hohlzylindersegment. Zur Bildung der veränderbaren Hülse 7 sind mindestens zwei Spannsegmente 5 um die Blase 3 angeordnet. Eine bevorzugte Ausführungsform weist zwei bis acht reihum Spannsegmente 5 auf die eine Hülse 7 bilden, wobei auch mehr als acht Spannsegmente 5 eine Hülse 7 bilden können. Zur Bildung einer im Aussendurchmesser veränderbaren Hülse 7 ist am Aussenumfang der Spannsegmente 5 ein Spannsegmentverbindungselement 9 angeordnet. Dieses verbindet die Spannsegmente 5 derart miteinander, dass sie in radialer Richtung elastisch verstell- bzw. verschiebbar miteinander verbunden sind. Damit die radiale Verschiebung linear verläuft, weisen die Spannelemente 5 am Innenumfang Führungsnuten 13 auf, in die, die stirnseitig an den Blasen 3 angeordneten Abschlussscheiben greifen. Vorzugsweise ist am Rohrverbindungselement 1 ein Ventil 10 angeordnet, das der Druckluftzuführung der Blasen 3 dient. Es ist vorteilhaft, wenn dies wie in Fig. 1 dargestellt, in der Mitte, beispielsweise über den metallischen Ring 6, erfolgt da dadurch die Zugänglichkeit gewährleistet ist. In den Figuren 2 und 3 sind die entlang des Umfangs verlaufenden Stege 12 ersichtlich, die den Gripp zwischen dem Rohrende 2 und dem Rohrverbindungselement 1 erhöhen. Es ist vorteilhaft, wenn dies, zwei sich gegenüberliegenden Abschlussscheiben 11 einer Blase 3 mit einem Zuganker 14 miteinander verbunden sind. Dies erhöht die Steifigkeit und Stabilität des Rohrverbindungselements 1

### Bezugszeichenliste

- 1: Rohrverbindungselement
- 2: Rohrende
- 3: Blase
- 4: Längsachse
- 5: Spannelement
- 6: Metallischer Ring
- 7: Hülse
- 8: Ringsegmentförmige Grundfläche
- 9: Spannsegmentverbindungselement
- 10: Ventil (schematisch angedeutet)
- 11: Abschlussscheibe
- 12: Steg
- 13: Führungsnut
- 14: Zuganker

## Patentansprüche

1. Rohrverbindungselement (1) zur Verbindung von zwei Rohrenden (2) über deren Innenumfang, vorzugsweise zur Verbindung von Mediumrohren in vorisolierten Rohrleitungen, beinhaltend, mindestens eine aufblasbare Blase (3), eine Längsachse (4), Spannsegmente (5) und einen metallischen Ring (6), **dadurch gekennzeichnet, dass** die Spannsegmente (5) am Aussenumfang der Blase (3) angeordnet sind und eine im Aussendurchmesser veränderbare Hülse (7) bilden.

2. Rohrverbindungselement (1) nach Anspruch 1, **dadurch gekennzeichnet, dass** die Spannsegmente (5) eine ringsegmentförmige Grundfläche (8) aufweisen und sich axial erstrecken.

3. Rohrverbindungselement (1) nach Anspruch 1 oder 2, **dadurch gekennzeichnet, dass** mindestens zwei Spannsegmente (5), die im Aussenumfang veränderbare zylindrische Hülse (7) bilden.

4. Rohrverbindungselement (1) nach Anspruch 1 bis 3, **dadurch gekennzeichnet, dass** ein Spannsegmentverbindungselement (9) die Spannsegmente (5) radial zur Anpassung des Aussendurchmesser der veränderbaren Hülse (7) elastisch verschiebbar führt.

5. Rohrverbindungselement (1) nach Anspruch 1 bis 4, **dadurch gekennzeichnet, dass** der metallische Ring (6) axial in der Mitte des Rohrverbindungselements (1) angeordnet ist.

6. Rohrverbindungselement (1) nach Anspruch 1 bis 5, **dadurch gekennzeichnet, dass** am Rohrverbindungselement (1) ein Ventil (10) zum Aufblasen der Blase (3) angeordnet ist.

7. Rohrverbindungselement (1) nach Anspruch 1 bis 6, **dadurch gekennzeichnet, dass** stirnseitig der Blasen (3) Abschlussscheiben (11) angeordnet sind.

8. Rohrverbindungselement (1) nach Anspruch 1 bis 7, **dadurch gekennzeichnet, dass** mindestens zwei aufblasbare Blasen (3) axial nebeneinander angeordnet sind.

9. Rohrverbindungselement (1) nach Anspruch 1 bis 8, **dadurch gekennzeichnet, dass** am Aussenumfang des Spannsegments (5) entlang des Umfangs verlaufende Stege (12) angeordnet sind.

10. Rohrverbindungselement (1) nach Anspruch 1 bis 9, **dadurch gekennzeichnet, dass** am Innenumfang des Spannsegments (5) Führungsnuten (13) zur Anordnung der Abschlussscheiben (11) angeordnet sind.

11. Rohrverbindungselement (1) nach Anspruch 1 bis 10, **dadurch gekennzeichnet, dass** entlang der Längsachs (4) ein Zuganker (14) angeordnet ist, der mit jeweils stirnseitig der Blase (3) angeordneten Abschlussscheiben (11) verbunden ist.
